# EUROPEAN PATENT APPLICATION

(11) **EP 1 355 287 A1**
(43) Date of publication of application: **22.10.2003**
(21) Application number: 02354062.8
(22) Date of filing: 19.04.2002
(51) Int. Cl.: G09B 19/06

(54) **Language learning materials and preparing method therefor**

(71) Applicant: Lets International Inc., Musashino-shi, Tokyo (JP)
(72) Inventor: Sanae, Ueda, c/o Lets International Inc., Musashino-shi, Tokyo (JP)
(74) Representative: Gasquet, Denis

(57) **Abstract**

To provide language learning materials and a method for preparing the language learning materials, by which it is possible to learn a living language in a practical method with the language learning materials in a shorter time at a lower cost, or to easily learn the language reasonably by persons who are poor in learning the language, or to apply a single subject to various fields, or to repeatedly use the language learning materials and the preparing method therefor. The method for preparing language learning materials includes the steps of: selecting predetermined information from the information about our daily life; producing predetermined types of sentences based on sentences described in the information, sentences produced by amending sentences described in the information, or sentences produced according to the information; and representing predetermined types of sentences by segmenting the predetermined types of sentences in word units, representing each word by a picture, a symbol, and/or a photo, and representing a portion of each of the segmented words which cannot be, or can hardly be, represented by the picture, the symbol, and/or the photo in a foreign language to be learned. The language learning materials are prepared by these steps.

## Description

### BACKGROUND OF THE INVENTION

### Field of the Invention

The present invention relates to a method for preparing language learning materials according to various information about daily life, and to learning materials prepared in the method, and more specifically to language learning materials stored as electronic data and a method for preparing the materials.

### Description of the Prior Art

Conventional language learning materials have been exclusively prepared based on the fields of learning regions, for example, the fields of applications for overseas travels, four seasons, business, children, housewives, etc.

It has also been popular to learn a foreign word, for example, 'apple' by drawing a picture of an apple, or a sentence by preparing a sentence in a foreign language by referring to a photo.

Furthermore, there has been technology of providing a language learning medium through which learners, including beginners and advanced learners, of a foreign language such as English etc. can effectively learn the language while appreciating movies and home video programs (Japanese Patent Laid-Open No. 10-333537).

The above mentioned document discloses the technology of providing a learning medium presented as a book etc. through which learners can learn the foreign language by comparing the conversation in the foreign language in a film with the conversation written in their mother tongue. The medium includes a guide column in which the summary of the story of the film is written in their mother tongue, and a leaning column containing the conversation in the foreign language of the film and the corresponding translation written in their mother tongue. The mother tongue entry of the learning column contains direct or almost direct translation of the conversation in the foreign language in the film into the conversation in their mother tongue.

### BRIEF SUMMARY OF THE INVENTION

### Object of the Invention

However, it takes a long time to prepare learning materials as described above for each specific field, and it is also costly. Nevertheless, the resultant learning materials do not always satisfy the users.

That is, since learning materials function as textbooks, the subjects are normally enhanced but are not practical. Therefore, it requires every effort to actually improve the learning efficiency. Especially, a learner who is poor at learning a foreign language has difficulty in keep learning it using these learning materials.

Furthermore, although a learner has learned one word and the meaning of a sentence using a photo etc., the learning result is not directly applied to other words or sentences. That is, the learning result cannot be simply applied to various fields.

The above mentioned document (Japanese Patent Laid-Open No. 10-333537) is limited to the conversation in films. Therefore, it cannot be widely applied to common language learning materials, and the utilization of the film conversation is considerably low. Furthermore, most learners become tired of watching the same film or video after repeatedly watching it. As a result, learning by repeating is not always recommended.

Then, to solve the above mentioned problems, the present invention aims at providing language learning materials and the method for preparing them through which it does not require a long time or a large cost to prepare learning materials, learners can learn a foreign language in a practical method, even those who are poor at learning a foreign language can easily learn it with fun, a subject can be widely applied to other fields, and the learning materials can be repeatedly used.

### Summary of the Invention

To attain the above mentioned objects, the method for preparing language learning materials according to the present invention includes the steps of:
selecting predetermined information from the information about our daily life;
producing predetermined types of sentences based on sentences described in the information, sentences produced by amending sentences described in the information, or sentences produced according to the information; and
representing predetermined types of sentences by segmenting the predetermined types of sentences in word units, representing each word by a picture, a symbol, and/or a photo, and representing a portion of each of the segmented words which cannot be, or can hardly be, represented by the picture, the symbol, and/or the photo in a foreign language to be learned.

It is recommended that the method for preparing language learning materials is prepared by using electronic data.

It is also recommended that the information refers to a TV commercial or other advertisements.

Furthermore, the method for preparing learning materials according to the present invention includes the steps of:
selecting predetermined information from the information about our daily life;
producing predetermined types of sentences based on sentences described in the information, sentences produced by amending sentences described in the information, or sentences produced according to the information;
preparing language learning materials for learners by representing predetermined types of sentences by segmenting the predetermined types of sentences in word units, representing each word by a picture, a symbol, and/or a photo, and representing a portion of each of the segmented words which cannot be, or can hardly be, represented by the picture, the symbol, and/or the photo in a foreign language to be learned; and
preparing language teaching materials for teachers in a foreign language by preparing each word, predetermined types of sentence, and sentences in the foreign language to be taught to learners.

It is recommended that the method for preparing language learning materials is prepared by using electronic data.

It is also recommended that the information refers to a TV commercial or other advertisements.

The language learning materials according to the present invention include:
predetermined information selected from the information about our daily life;
predetermined types of sentences prepared based on sentences described in the information, sentences produced by amending sentences described in the information, or sentences produced according to the information; and
predetermined types of sentences represented by segmenting the predetermined types of sentences in word units, representing each word by a picture, a symbol, and/or a photo, and representing a portion of each of the segmented words which cannot be, or can hardly be, represented by the picture, the symbol, and/or the photo in a foreign language to be learned.

It is recommended that the language learning materials are prepared by using electronic data.

It is also recommended that the information refers to a TV commercial or other advertisements.

Furthermore, the language learning materials according to the present invention include:
predetermined information selected from the information about our daily life;
predetermined types of sentences based on sentences described in the information, sentences produced by amending sentences described in the information, or sentences produced according to the information;
language learning materials for learners containing predetermined types of sentences represented by segmenting the predetermined types of sentences in word units, representing each word by a picture, a symbol, and/or a photo, and representing a portion of each of the segmented words which cannot be, or can hardly be, represented by the picture, the symbol, and/or the photo in a foreign language to be learned; and
language teaching materials for teachers in a foreign language represented by preparing each word, predetermined types of sentence, and sentences in the foreign language to be taught to learners.

It is recommended that the language learning materials are prepared by using electronic data.

It is also recommended that the information refers to a TV commercial or other advertisements.

Since appropriate information for learning a foreign language is selected from the information about our daily life, learners can easily learn the foreign language in a practical method without difficulty.

Furthermore, the learning materials is appropriate for those who are poor at learning a foreign language because predetermined sentences according to the information are segmented in word units, and the words are represented by pictures, symbols, and/or photos, etc., thereby allowing the learners to visually learn the sentences. Additionally, those who are not poor at learning a foreign language can easily learn a foreign language with fun in a practical method, and even those who are to learn their mother tongue when coming back to their home town after their long stay in a foreign country from their childhood can easily learn their mother tongue. The pictures prepared according to the present invention include various patterns, a single color, a combination of two or more colors, etc.

A predetermined sentence of a predetermined type is segmented in word units according to the information. In this connection, a word can be replaced with another word, and a predetermined type of sentence can be replaced with another type of sentence. Therefore, a piece of information can be applied in various manners, thereby allowing a learner to learn a language for various situations in a practical method.

The information can be any piece of information about our daily life, and is especially effective when it relates to TV commercials, advertisements of newspapers, etc.

Furthermore, since the language learning materials according to the present invention are stored as electronic data, words and sentence types can be easily changed and repeatedly learned.

The present invention uses the information about our daily life, segments a sentence according to the information in word units, represents it by pictures, symbols, and/or photos, also represents the type of the sentence by pictures, symbols, and/or photos, and represents a portion which cannot be represented by pictures, symbols, and/or photos in a language which a learner is to learn, thereby easily preparing the learning materials in a shorter time at a lower cost.

Furthermore, the learning materials can be more easily prepared using electronic data in a shorter time.

Since there are both learning materials for learners and teaching materials for teacher according to the present invention, it is convenient for teachers to teach a language to a learner.

### BRIEF DESCRIPTION OF THE DRAWINGS

FIG. 1 shows an example of information about our daily life, and shows an advertisement of beer;
FIG. 2 shows how a sentence is prepared based on the advertisement of the beer, and how words of the sentence are represented by pictures, symbols, and photos; and
FIG. 3 shows a new sentence prepared by partly amending a type of the sentence shown in FIG. 2, and a type of a new sentence.

### DETAILED DESCRIPTION OF THE PREFERRED EMBODIMENTS

An example of an embodiment of the present invention will be described below by referring to the attached drawings.

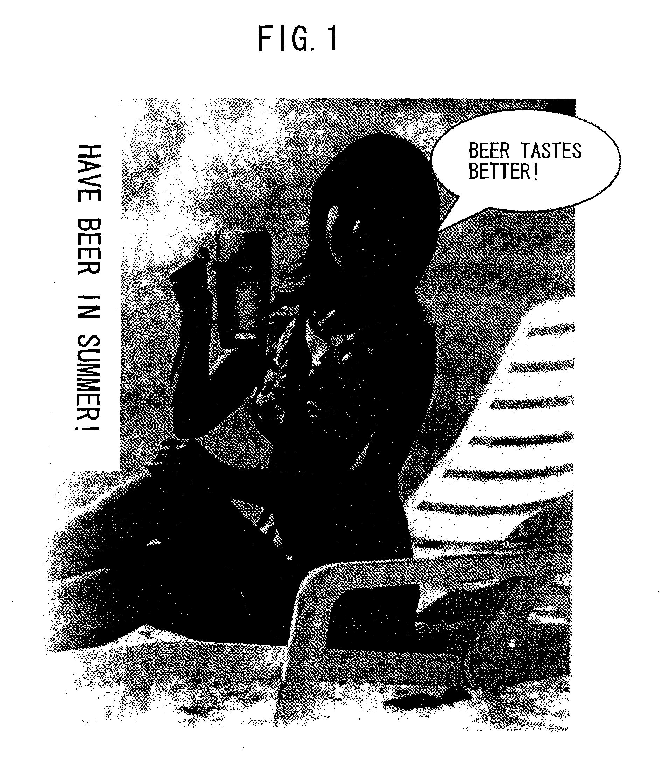

FIG. 1 shows an example of information about our daily life, and shows an advertisement of beer.

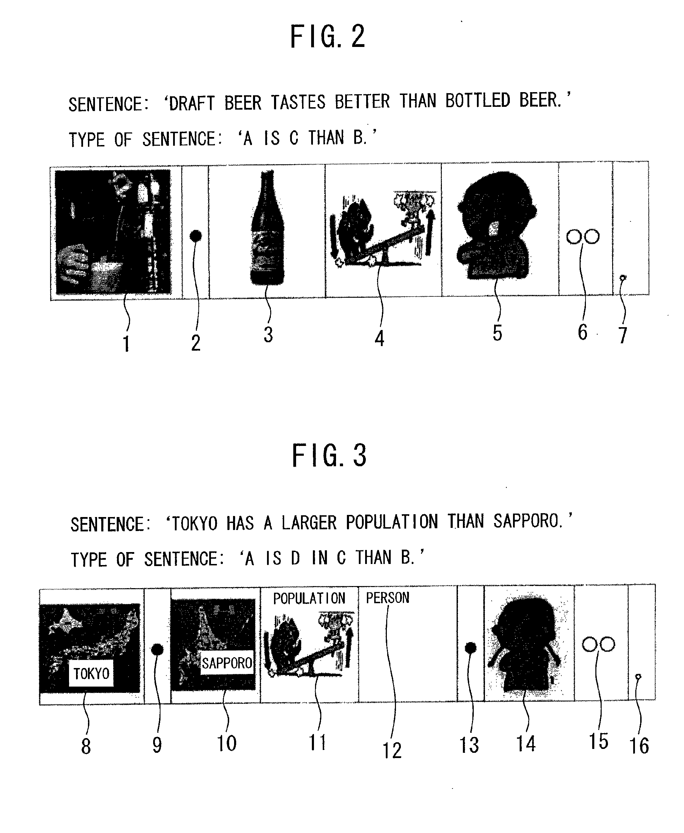

FIG. 2 shows how a sentence is prepared based on the advertisement of the beer, and how words of the sentence are represented by pictures, symbols, and photos.

FIG. 1 shows the sentence 'Beer tastes better!'. In FIG. 2, the sentence is amended into 'Draft beer tastes better than bottled beer. ' , and also shows the basic type of sentence 'A is C than B.' The learning materials are practically presented by pictures, symbols, and photos.

The portion corresponding to 'A' in the type of sentence is represented by 'photo 1 of draft beer'. The portion corresponding to 'tastes' is represented by a symbol 2'· '. The portion corresponding to 'B' is represented by the 'photo 3 of bottled beer'. The portion corresponding to 'than' is represented by a 'picture 4 of animals on the seesaw' . The portion corresponding to 'C' is represented by a 'picture 5 of a child tastefully eating ice cream'. The portion corresponding to 'true' is represented by a symbol 6 '○ ○ '. The symbol 'o ' is a period 7 indicating the end of a sentence.

Thus, the sentence 'Draft beer tastes better than bottled beer.' is prepared using pictures, symbols, and photos. The words 'draft beer', 'bottled beer', and 'better', and the translated representation of 'tastes', 'than', and 'true' in a language to be learned are teaching materials of a teacher.

Furthermore, the portions 'A', 'B', and 'C' can be replaced with other pictures or photos, thereby allowing a teacher to have a learner learn a number of words.

FIG. 3 shows a new sentence prepared by partly amending the type of sentence shown in FIG. 2, and the type of the new sentence. That is, a sentence 'Tokyo has a larger population than Sapporo.' is prepared. Based on this sentence, the type of sentence 'A is D in C than B.' in FIG. 3 shows an example for a person who learns Japanese.

Therefore, it shows the learning materials for learners by practically representing the sentence 'Tokyo has a larger population than Sapporo.' using pictures, symbols, Kanji, and Hiragana.

The portion corresponding to 'A' in the above mentioned type of sentence is represented by the 'map of Japan and the characters indicating Tokyo 8'. The portion corresponding to 'has' is represented by the symbol 9 '•'. The portion corresponding to 'B' is represented by the 'map of Hokkaido and the characters indicating Sapporo 10'. The portion corresponding to 'than' is represented by the 'picture 11 of animals on the seesaw'. The portion corresponding to 'C' is represented by a Hiragana 'person 12'. The portion corresponding to 'in' is represented by a symbol 13 '•'. The portion corresponding to 'D' is represented by the 'picture 14 in which a girl has a number of goods'. The portion 'true' is represented by '0015'. The symbol 'o ' is a period indicating the end of a sentence.

Thus, in FIG. 3, the portion which cannot be, or can hardly be, represented by pictures, symbols, and photos, that is, 'Tokyo', 'Sapporo', and especially a 'person' can be represented as a child, a woman, and a man respectively by a picture of a child, a picture of a woman, and a picture of a man. Therefore, it is hard to represent a person by a picture. In such a case, a foreign language to be learned (FIG. 3 shows the case in which Japanese is learned) is expressed.

Thus, the sentence 'Tokyo has a larger population than Sapporo.' can be prepared using pictures, symbols, and characters, and the learning materials translated into the language to be learned are prepared as the teaching materials for a teacher.

Furthermore, the portions 'A', 'B', 'C', and 'D' can be replaced with other pictures, photos, and characters to allow a teacher to have learners learn a larger number of words.

Thus, a predetermined sentence is prepared according to predetermined information. Based on the sentence, a program type of sentence can be prepared. However, the sentence and the type of sentence can be variably changed as shown in FIGS. 2 and 3.

If the information about the advertisement etc. of beer, sentence, type of sentence, picture, symbol, photo, characters, etc. can be prepared as electronic data using a computer such as a personal computer etc., then the information, sentence, type of sentence, picture, symbol, photo, character, etc. can be easily changed and the translated teaching materials for teachers can also be easily modified, thereby preparing learning materials for learners and teaching materials for teachers in a shorter time and at a lower cost.

With the above mentioned configuration, the present invention can have learners learn a language in a practical method with the language learning materials prepared in a shorter time at a lower cost. Furthermore, those who are poor at learning a foreign language can easily learn a language without any difficulty. Additionally, a single subject can be applied to various fields, and learning by repeating can be effectively performed.

## Claims

1. A method for preparing language learning materials, comprising the steps of:
selecting predetermined information from information about our daily life;
producing predetermined types of sentences based on sentences described in the information, sentences produced by amending sentences described in the information, or sentences produced according to the information; and
representing predetermined types of sentences by segmenting the predetermined types of sentences in word units, representing each word by a picture, a symbol, and/or a photo, and representing a portion of each of the segmented words which cannot be, or can hardly be, represented by the picture, the symbol, and/or the photo in a foreign language to be learned.

2. The method for preparing language learning materials according to claim 1, wherein
said method for preparing language learning materials is prepared by using electronic data.

3. The method for preparing language learning materials according to claim 1 or 2, wherein
said information refers to a TV commercial or other advertisements.

4. A method for preparing learning materials comprising the steps of:
selecting predetermined information from the information about our daily life;
producing predetermined types of sentences based on sentences described in the information, sentences produced by amending sentences described in the information, or sentences produced according to the information;
preparing language learning materials for learners by representing predetermined types of sentences by segmenting the predetermined types of sentences in word units, representing each word by a picture, a symbol, and/or a photo, and representing a portion of each of the segmented words which cannot be, or can hardly be, represented by the picture, the symbol, and/or the photo in a foreign language to be learned; and
preparing language teaching materials for teachers in a foreign language by preparing each word, predetermined types of sentence, and sentences in the foreign language to be taught to learners.

5. The method for preparing language learning materials according to claim 4, wherein
said method for preparing language learning materials is prepared by using electronic data.

6. The method for preparing language learning materials according to claim 4 or 5, wherein
said information refers to a TV commercial or other advertisements.

7. Language learning materials, comprising:
predetermined information selected from information about our daily life;
predetermined types of sentences prepared based on sentences described in the information, sentences produced by amending sentences described in the information, or sentences produced according to the information; and
predetermined types of sentences represented by segmenting the predetermined types of sentences in word units, representing each word by a picture, a symbol, and/or a photo, and representing a portion of each of the segmented words which cannot be, or can hardly be, represented by the picture, the symbol, and/or the photo in a foreign language to be learned.

8. The language learning materials according to claim 7, wherein said language learning materials are prepared by using electronic data.

9. The language learning materials according to claim 7 or 8, wherein said information refers to a TV commercial or other advertisements.

10. Language learning materials, comprising:
predetermined information selected from information about our daily life;
predetermined types of sentences based on sentences described in the information, sentences produced by amending sentences described in the information, or sentences produced according to the information;
language learning materials for learners containing predetermined types of sentences represented by segmenting the predetermined types of sentences in word units, representing each word by a picture, a symbol, and/or a photo, and representing a portion of each of the segmented words which cannot be, or can hardly be, represented by the picture, the symbol, and/or the photo in a foreign language to be learned; and
language teaching materials for teachers in a foreign language represented by preparing each word, predetermined types of sentence, and sentences in the foreign language to be taught to learners.

11. The language learning materials according to claim 10, wherein said language learning materials are prepared by using electronic data.

12. The language learning materials according to claim 10 or 11, wherein said information refers to a TV commercial or other advertisements.
